(19) Europäisches Patentamt

European Patent Office

Office européen des brevets

(11) **EP 3 345 806 B1**

(12) **EUROPEAN PATENT SPECIFICATION**

(45) Date of publication and mention
of the grant of the patent:
**18.09.2019 Bulletin 2019/38**

(51) Int Cl.:
***B62D 1/28*** *(2006.01)*

(21) Application number: **17210681.7**

(22) Date of filing: **27.12.2017**

(54) **VEHICLE STEERING SYSTEM**

FAHRZEUGLENKSYSTEM

SYSTÈME DE DIRECTION DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2016 JP 2016256254**

(43) Date of publication of application:
**11.07.2018 Bulletin 2018/28**

(73) Proprietor: **JTEKT Corporation
Osaka-shi, Osaka 542-8502 (JP)**

(72) Inventors:
• **MOREILLON, Maxime
Osaka-shi, Osaka 542-8502 (JP)**
• **TAMURA, Tsutomu
Osaka-shi, Osaka 542-8502 (JP)**
• **FUCHS, Robert
Osaka-shi, Osaka 542-8502 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)**

(56) References cited:
**DE-A1-102014 226 781    JP-A- 2004 256 076
US-A1- 2008 091 320**

**Description**

BACKGROUND OF THE INVENTION

1. Field of the Invention

The invention relates generally to vehicle steering systems, and in particular to a vehicle steering system that enables both of automatic steering control involving automatically controlling a steering angle and manual steering control (assist control) using the same electric motor.

2. Description of the Related Art

Japanese Patent Application Publication No. 2004-256076 (JP 2004-256076 A) discloses a vehicle steering system that enables both of automatic steering control involving automatically controlling a steering angle and manual steering control using the same actuator (electric motor). In the invention disclosed in JP 2004-256076 A, a steering torque (hereinafter referred to as a "target actuator torque Tt") to be applied to a steering shaft by the actuator is represented by Equation (1):

$$Tt = Kasst \cdot Tasst + Kauto \cdot Tauto \qquad ... (1)$$

In Equation (1), Tasst denotes a target assist torque, Tauto denotes a target steering torque for the automatic steering control (hereinafter referred to as a "target automatic steering torque"), and Kasst and Kauto each denote a weighting factor. The actuator is controlled such that the actuator produces a torque corresponding to the target actuator torque Tt.

The manual steering control involves setting Kauto at 0, so that $Tt = Kasst \cdot Tasst$. The manual steering control involves setting the factor Kasst at 1, so that $Tt = Tasst$. The automatic steering control involves calculating the target actuator torque Tt in accordance with Equation (1). During the automatic steering control, unless a steering operation is performed by a driver, the steering torque is 0 except the start and end of the automatic steering control. Thus, the target assist torque Tasst is 0. During the automatic steering control, $Tt = Tauto$ because the factor Kauto is set at 1.

The invention disclosed in JP 2004-256076 A involves starting transition control for making a transition from the automatic steering control to the manual steering control upon detecting steering intervention during the automatic steering control. In the course of the transition control, the value of the factor Kauto is reduced by a predetermined value K1 and the value of the factor Kasst is increased by a predetermined value K2 each time a predetermined period of time elapses. Note that the value of the factor Kauto is fixed at 0 when the factor Kauto falls below 0, and the value of the factor Kasst is fixed at 1 when the factor Kasst exceeds 1. Using the factors Kauto and Kasst updated, the target actuator torque Tt is calculated. The actuator is controlled such that the actuator produces a torque corresponding to the target actuator torque Tt calculated. Thus, when the value of the factor Kauto is 0 and the value of the factor Kasst is 1, the transition control ends.

The invention disclosed in JP 2004-256076 A involves gradually reducing the value of factor Kauto with respect to time and gradually increasing the value of the factor Kasst with respect to time during the transition control. When the value of the factor Kauto reaches 0 and the value of the factor Kasst reaches 1, the transition control ends. This reduces or eliminates variations in the target actuator torque Tt when the automatic steering control is deactivated, making it possible to reduce a sense of discomfort felt by the driver. In the invention disclosed in JP 2004-256076 A, however, a period of time between the start and end of the transition control (i.e., a transition control time) remains constant at all times. This makes it impossible to change the transition control time by a steering operation performed by the driver. Thus, in the event of an emergency, for example, the automatic steering control may not be quickly changed to the manual steering control.

DE 10 2014 226 781 A1 discloses a vehicle steering system having the features of the preamble of claim 1.

SUMMARY OF THE INVENTION

An object of the invention is to provide a vehicle steering system that reduces or eliminates variations in motor torque when automatic steering control is deactivated and changes a transition control time by a steering operation performed by a driver.

A vehicle steering system according to an aspect of the invention includes an electric motor, an automatic steering controller, a manual steering controller, and an automatic steering deactivator. The electric motor is configured to provide a steering force to a steering operation mechanism of a vehicle. The automatic steering controller is configured to set, in accordance with an angle difference between a target steering angle and an actual steering angle, a target automatic steering torque to reduce the angle difference to zero, and configured to control the electric motor in accordance with the target automatic steering torque so as to carry out automatic steering control. The manual steering controller is configured to control the electric motor in accordance with a target assist torque responsive to a steering torque so as to carry out manual steering control. The automatic steering deactivator is configured to change the automatic steering control to the manual steering control in response to a steering operation performed by a driver during the automatic steering control carried out by the automatic steering controller. The automatic steering deactivator includes a transition controller and a changer. The transition controller is configured to calculate a target motor torque by assigning a weight to each of the target automatic steering torque and the target assist torque using the angle difference upon satisfaction of a transition control start requirement including at least a requirement that an absolute value of the steering torque is equal to or greater than a first predetermined value, and configured to control the electric motor in accordance with the target motor torque so as to carry out transition control. The changer is configured to end the transition control and change the automatic steering control to the manual steering control when an absolute value of the angle difference is greater than a second predetermined value.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a diagram illustrating a schematic configuration of an electric power steering system that is a vehicle steering system according to an embodiment of the invention;
FIG. 2 is a block diagram illustrating an electric configuration of an electronic control unit (ECU);
FIG. 3 is a graph illustrating an example of setting a target assist torque Tmd* relative to a steering torque Td;
FIG. 4 is a flow chart illustrating exemplary operations to be carried out by an automatic steering deactivating controller during automatic steering mode;
FIG. 5 is a schematic diagram illustrating a simple model for a column type EPS;
FIG. 6A is a graph illustrating the relationship between a steering angle $\theta$ and a motor torque Tm during the automatic steering mode;
FIG. 6B is a graph illustrating the relationship between the steering torque Td and the target assist torque Tmd* during manual steering mode;
FIG. 7A is a graph illustrating the relationship between the steering angle $\theta$ and the motor torque Tm during the automatic steering mode and transition control;
FIG. 7B is a graph illustrating the relationship between the steering torque Td and the target assist torque Tmd* during the manual steering mode and transition control;
FIG. 8A is a graph illustrating the relationship between the steering angle $\theta$ and the motor torque Tm during the automatic steering mode and transition control;
FIG. 8B is a graph illustrating the relationship between the steering torque Td and the target assist torque Tmd* during the manual steering mode and transition control;
FIG. 9 is a flow chart illustrating alternative exemplary operations to be carried out by the automatic steering deactivating controller during the automatic steering mode; and
FIG. 10 is a flow chart illustrating further alternative exemplary operations to be carried out by the automatic steering deactivating controller during the automatic steering mode.

DETAILED DESCRIPTION OF EMBODIMENTS

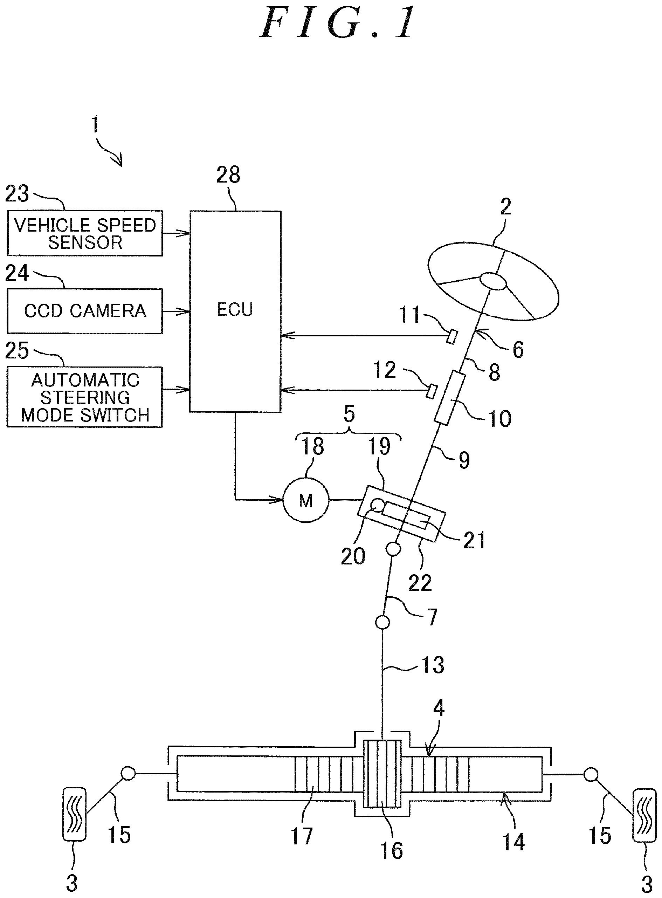

Embodiments of the invention will be described in detail below with reference to the accompanying drawings. FIG. 1 is a diagram illustrating a schematic configuration of an electric power steering system 1 that is a vehicle steering system according to an embodiment of the invention. The electric power steering (EPS) system 1 is a column assist electric power steering system in which an electric motor and a speed reduction mechanism are disposed in a column portion.
The electric power steering system 1 includes a steering wheel 2, a steering operation mechanism 4, and a steering assist mechanism 5. The steering wheel 2 is a steering member to steer a vehicle in a desired direction. The steering operation mechanism 4 steers steered wheels 3 in response to rotation of the steering wheel 2. The steering assist mechanism 5 assists a driver in steering the vehicle. The steering wheel 2 and the steering operation mechanism 4 are mechanically coupled to each other through a steering shaft 6 and an intermediate shaft 7.

The steering shaft 6 includes: an input shaft 8 coupled to the steering wheel 2; and an output shaft 9 coupled to the intermediate shaft 7. The input shaft 8 and the output shaft 9 are coupled to each other through a torsion bar 10 such that the input shaft 8 and the output shaft 9 are rotatable relative to each other. A steering angle sensor 11 is provided in the vicinity of the input shaft 8. The steering angle sensor 11 detects a steering angle $\theta$ that is an angle of rotation of the steering wheel 2 (i.e., an angle of rotation of the steering shaft 6). The steering angle sensor 11 detects the amount of rotation (i.e., the angle of rotation) of the steering wheel 2 in both of normal and reverse directions with respect to a neutral position (i.e., a reference position) of the steering wheel 2. The steering angle sensor 11 outputs the amount of counterclockwise rotation of the steering wheel 2 from the neutral position in the form of a positive value, for example. The steering angle sensor 11 outputs the amount of clockwise rotation of the steering wheel 2 from the neutral position in the form of a negative value, for example.

A torque sensor 12 is disposed in the vicinity of the torsion bar 10. The torque sensor 12 detects a steering torque (driver torque) Td applied to the steering wheel 2 in accordance with the amount of relative rotational displacement between the input shaft 8 and the output shaft 9. In this embodiment, the steering torque Td detected by the torque sensor 12 includes a torque to steer the vehicle to the left and a torque to steer the vehicle to the right, for example. The torque sensor 12 outputs a positive value upon detecting the torque to steer the vehicle to the left. The torque sensor 12 outputs a negative value upon detecting the torque to steer the vehicle to the right. The greater the absolute value of the positive or negative value, the greater the magnitude of the steering torque.

The steering operation mechanism 4 is a rack and pinion mechanism including a pinion shaft 13 and a rack shaft 14 that serves as a steering operation shaft. Each of the steered wheels 3 is coupled to an associated one of the ends of the rack shaft 14 through a tie rod 15 and a steering knuckle arm (not illustrated). The pinion shaft 13 is coupled to the intermediate shaft 7. The pinion shaft 13 rotates in response to a steering operation performed on the steering wheel 2. A pinion 16 is coupled to an end of the pinion shaft 13.

The rack shaft 14 extends linearly in the right-left direction of the vehicle. An axially intermediate portion of the rack shaft 14 is provided with a rack 17 that meshes with the pinion 16. The pinion 16 and the rack 17 convert rotation of the pinion shaft 13 into axial movement of the rack shaft 14. Axially moving the rack shaft 14 makes it possible to steer the steered wheels 3.

When a steering operation is performed on the steering wheel 2 (i.e., when the steering wheel 2 is rotated), the rotation of the steering wheel 2 is transmitted to the pinion shaft 13 through the steering shaft 6 and the intermediate shaft 7. The pinion 16 and the rack 17 convert rotation of the pinion shaft 13 into axial movement of the rack shaft 14. Thus, the steered wheels 3 are steered. The steering assist mechanism 5 includes an electric motor 18 and a speed reduction mechanism 19. The electric motor 18 produces a steering assist force (i.e., an assist torque). The speed reduction mechanism 19 amplifies a torque output from the electric motor 18 and transmits the torque to the steering operation mechanism 4. The speed reduction mechanism 19 is a worm gear mechanism including a worm gear 20 and a worm wheel 21 that meshes with the worm gear 20. The speed reduction mechanism 19 is housed in a gear housing 22 serving as a transmission mechanism housing.

The worm gear 20 is rotated by the electric motor 18. The worm wheel 21 is coupled to the output shaft 9 such that the worm wheel 21 is rotatable together with the output shaft 9. The worm wheel 21 is rotated by the worm gear 20. The rotation of the worm gear 20 caused by the electric motor 18 rotates the worm wheel 21. The rotation of the worm wheel 21 applies a motor torque to the steering shaft 6 and rotates the steering shaft 6 (i.e., the output shaft 9). The rotation of the steering shaft 6 is transmitted to the pinion shaft 13 through the intermediate shaft 7 so as to rotate the pinion shaft 13. The rotation of the pinion shaft 13 is converted into axial movement of the rack shaft 14. Thus, the steered wheels 3 are steered. In other words, rotating the worm gear 20 by the electric motor 18 makes it possible to assist the driver in steering the vehicle and steer the steered wheels 3 by the electric motor 18.

Torques to be applied to the speed reduction mechanism 19 include: a motor torque produced by the electric motor 18; and external torques other than the motor torque. The external torques other than the motor torque include the steering torque Td and a load torque (load) Tr. The steering torque Td is applied to the steering wheel 2 by the driver. The load torque Tr is applied to the rack shaft 14 (and the speed reduction mechanism 19) from the steered wheels 3. The vehicle is equipped with: a vehicle speed sensor 23 to detect a vehicle speed V; and a charge-coupled device (CCD) camera 24 to capture an image of a road in front of the vehicle traveling forward. The vehicle is further provided with an automatic steering mode switch 25 to activate and deactivate an automatic steering mode.

An electronic control unit (ECU) 28 receives the steering angle $\theta$, the steering torque Td, the vehicle speed V, an image signal, and an output signal. The steering angle $\theta$ is detected by the steering angle sensor 11. The steering torque Td is detected by the torque sensor 12. The vehicle speed V is detected by the vehicle speed sensor 23. The image signal is output from the CCD camera 24. The output signal is provided from the automatic steering mode switch 25. In accordance with the signals received, the ECU 28 controls the electric motor 18.

When the automatic steering mode is selected by an operation performed on the automatic steering mode switch 25, the ECU 28 controls the electric motor 18 in accordance with the automatic steering mode involving automatic steering control. In this embodiment, the automatic steering control is lane keeping control to cause the vehicle to travel along a target path. When the automatic steering mode is deactivated by an operation performed on the automatic steering mode switch 25, the ECU 28 deactivates the automatic steering control so as to control the electric motor 18 in accordance with a manual steering mode (i.e., an assist control mode) involving manual steering control (i.e., assist control). The manual steering mode is a control mode involving causing the electric motor 18 to produce a steering assist force (i.e., an assist torque) to assist the driver in steering the vehicle in accordance with the steering torque Td and the vehicle speed V. The steering torque Td is detected by the torque sensor 12. The vehicle speed V is detected by the vehicle speed sensor 23.

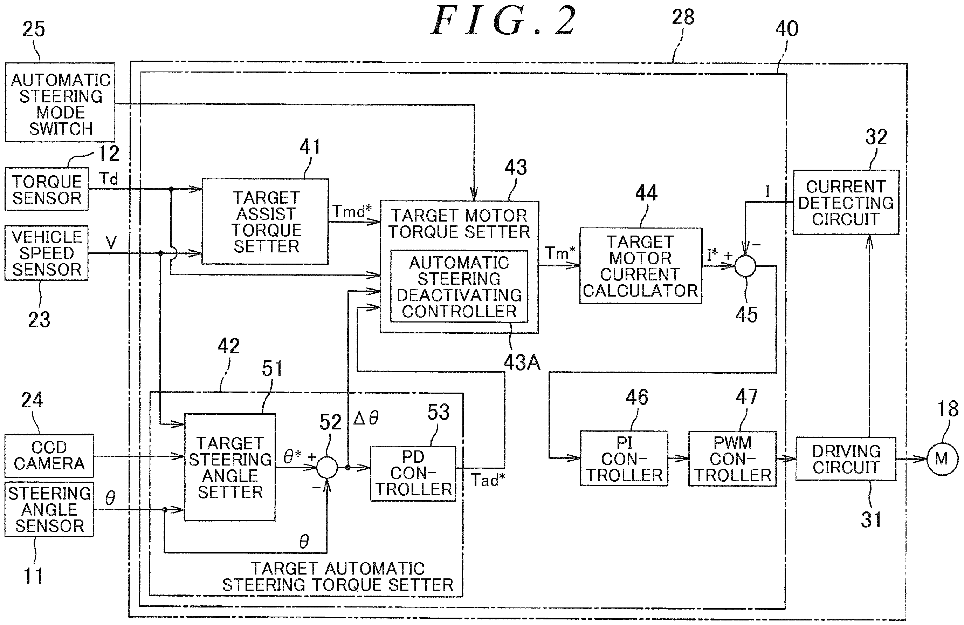

In addition to the function of changing the control mode in accordance with settings made for the automatic steering mode switch 25, the ECU 28 has the function of changing the control mode from the automatic steering mode to the manual steering mode upon detecting an intervening operation resulting from a steering operation performed by the driver during the automatic steering mode. This function will be referred to as an "override function". FIG. 2 is a block diagram illustrating an electric configuration of the ECU 28.

The ECU 28 includes a microcomputer 40, a driving circuit (inverter circuit) 31, and a current detecting circuit 32. The driving circuit 31 is controlled by the microcomputer 40 so as to supply power to the electric motor 18. The current detecting circuit 32 detects a current flowing through the electric motor 18. The current flowing through the electric motor 18 will hereinafter be referred to as a "motor current I". The microcomputer 40 includes a central processing unit (CPU) and memories, such as a read-only memory (ROM), a random-access memory (RAM), and a nonvolatile memory. The microcomputer 40 executes a predetermined program and thus functions as a plurality of functional processing units. The plurality of functional processing units include a target assist torque setter 41, a target automatic steering torque setter 42, a target motor torque setter (mode changing controller) 43, a target motor current calculator 44, a current difference calculator 45, a PI controller 46, and a pulse width modulation (PWM) controller 47.

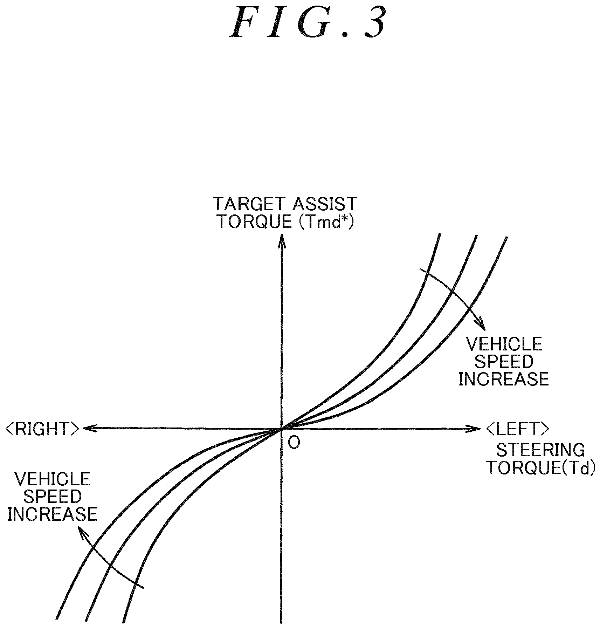

The target assist torque setter 41 sets a target assist torque Tmd* that is an assist torque target value. The target assist torque setter 41 sets the target assist torque Tmd* in accordance with the steering torque Td and the vehicle speed V. The steering torque Td is detected by the torque sensor 12. The vehicle speed V is detected by the vehicle speed sensor 23. FIG. 3 illustrates an example of setting the target assist torque Tmd* relative to the steering torque Td. When the steering torque Td is a torque to steer the vehicle to the left, the steering torque Td assumes a positive value, for example. When the steering torque Td is a torque to steer the vehicle to the right, the steering torque Td assumes a negative value, for example. When the electric motor 18 is required to produce a steering assist force to steer the vehicle to the left, the target assist torque Tmd* assumes a positive value, for example. When the electric motor 18 is required to produce a steering assist force to steer the vehicle to the right, the target assist torque Tmd* assumes a negative value, for example.

The target assist torque Tmd* assumes a positive value when the steering torque Td assumes a positive value, and assumes a negative value when the steering torque Td assumes a negative value. The target assist torque Tmd* is set such that the absolute value of the target assist torque Tmd* increases as the absolute value of the steering torque Td increases. The target assist torque Tmd* is set such that the absolute value of the target assist torque Tmd* decreases as the vehicle speed V detected by the vehicle speed sensor 23 increases. Thus, in the manual steering mode, a large steering assist force is produced during low speed traveling, and the steering assist force is reduced during high speed traveling.

The target automatic steering torque setter 42 sets a target automatic steering torque Tad* that is a motor torque target value during the automatic steering mode. The target automatic steering torque setter 42 includes a target steering angle setter 51, an angle difference calculator 52, and a PD controller 53. The target steering angle setter 51 sets a target steering angle $\theta^*$ that is a steering angle target value during the automatic steering mode. Specifically, the target steering angle setter 51 detects a travel lane and the position of the vehicle from an image of a road in front of the vehicle captured by the CCD camera 24, and sets a target path on the basis of the result of detection. In accordance with the vehicle speed V detected by the vehicle speed sensor 23 and the steering angle $\theta$ detected by the steering angle sensor 11, the target steering angle setter 51 sets the target steering angle $\theta^*$ that is a steering angle target value for automatic travel of the vehicle along the target path. Because the process of setting the target steering angle $\theta^*$ in this manner is known in the field of lane keeping control, detailed description thereof will be omitted.

The angle difference calculator 52 calculates a difference between the target steering angle $\theta^*$ set by the target steering angle setter 51 and the steering angle $\theta$ detected by the steering angle sensor 11. The difference calculated by the angle difference calculator 52 is represented as ($\theta^* - \theta$) and will be referred to as an "angle difference $\Delta\theta$". The PD controller 53 performs a PD calculation (i.e., a proportional-plus-derivative calculation) on the angle difference $\Delta\theta$ calculated by the angle difference calculator 52. Thus, the PD controller 53 calculates a motor torque to bring the angle difference $\Delta\theta$ close to zero. The motor torque calculated by the PD controller 53 is the target automatic steering torque Tad*.

The target motor torque setter (mode changing controller) 43 receives the target assist torque Tmd*, the target automatic steering torque Tad*, the angle difference $\Delta\theta$, the output signal from the automatic steering mode switch 25, and the steering torque Td detected by the torque sensor 12. In accordance with the signals received, the target motor torque setter 43 sets a target motor torque Tm* that is a motor torque target value for the electric motor 18.

Specifically, when the control mode is set to be the manual steering mode, the target assist torque Tmd* set by the target assist torque setter 41 is set to be the target motor torque Tm* by the target motor torque setter 43. When the control mode is set to be the automatic steering mode, the target automatic steering torque Tad* set by the target automatic steering torque setter 42 is set to be the target motor torque Tm* by the target motor torque setter 43.

The target motor torque setter 43 includes an automatic steering deactivating controller 43A to change the control mode from the automatic steering mode to the manual steering mode in accordance with an intervening operation resulting from a steering operation performed by the driver during the automatic steering mode. The automatic steering deactivating controller 43A determines whether a predetermined transition control start requirement is satisfied. Upon determining that the transition control start requirement is satisfied, the automatic steering deactivating controller 43A starts transition control. The transition control start requirement includes at least a requirement that an absolute value |Td| of the steering torque Td detected by the torque sensor 12 is equal to or greater than a predetermined torque threshold value. In carrying out the transition control, the automatic steering deactivating controller 43A assigns a weight to each of the target automatic steering torque Tad* and the target assist torque Tmd* using the angle difference $\Delta\theta$ so as to set the target motor torque Tm*. The operations of the automatic steering deactivating controller 43A will be described in more detail below.

The target motor current calculator 44 divides the target motor torque Tm* set by the target motor torque setter 43 by a torque constant for the electric motor 18 so as to calculate a target motor current I*. The current difference calculator 45 calculates a difference between the target motor current I* calculated by the target motor current calculator 44 and the motor current I detected by the current detecting circuit 32. The difference calculated by the current difference calculator 45 will be referred to as a "current difference $\Delta I$". The current difference $\Delta I$ is represented as $\Delta I = I^* - I$.

The PI controller 46 performs a PI calculation (i.e., a proportional-plus-integral calculation) on the current difference $\Delta I$ calculated by the current difference calculator 45. Thus, the PI controller 46 generates a driving command value to cause the motor current I flowing through the electric motor 18 to reach the target motor current I*. The PWM controller 47 generates a PWM control signal for a duty ratio responsive to the driving command value, and supplies the PWM control signal to the driving circuit 31. In response to this signal, the driving circuit 31 supplies power responsive to the driving command value to the electric motor 18.

When the control mode is set to be the manual steering mode, the target assist torque Tmd* is set to be the target motor torque Tm*. Thus, the electric motor 18 is controlled (i.e., the manual steering control is carried out) such that the electric motor 18 produces a motor torque responsive to the target assist torque Tmd*. When the control mode is set to be the automatic steering mode, the target automatic steering torque Tad* is set to be the target motor torque Tm*. Thus, the electric motor 18 is controlled (i.e., the automatic steering control is carried out) such that the electric motor 18 produces a motor torque responsive to the target automatic steering torque Tad*. During the transition control, the electric motor 18 is controlled such that the electric motor 18 produces a motor torque responsive to the target motor torque Tm* set by the automatic steering deactivating controller 43A.

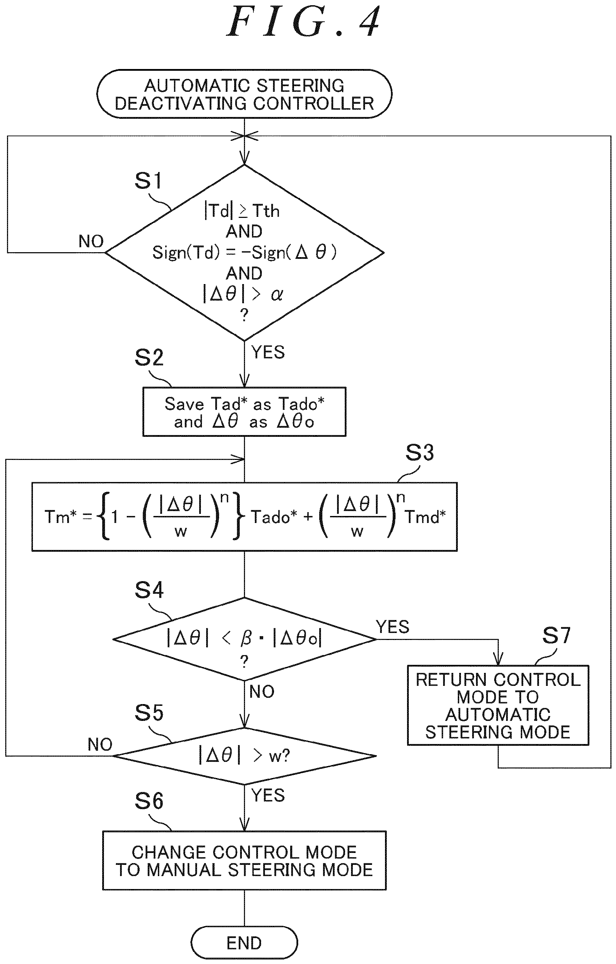

FIG. 4 is a flow chart illustrating exemplary operations to be carried out by the automatic steering deactivating controller 43A during the automatic steering mode. In step S1, the automatic steering deactivating controller 43A determines whether the transition control start requirement is satisfied. In this example, the transition control start requirement is that the absolute value |Td| of the steering torque Td is equal to or greater than a predetermined torque threshold value Tth (where Tth > 0), the sign (Td) of the steering torque Td differs from the sign ($\Delta\theta$) of the angle difference $\Delta\theta$, and an absolute value |$\Delta\theta$| of the angle difference $\Delta\theta$ is greater than an angle threshold value $\alpha$ (where $\alpha > 0$). The requirement that the sign (Td) of the steering torque Td differs from the sign ($\Delta\theta$) of the angle difference $\Delta\theta$ means that the direction of the steering torque Td is a direction in which the absolute value of the angle difference $\Delta\theta$ increases. The angle threshold value $\alpha$ is set to be sufficiently smaller than a predetermined transition angle width w (where w > 0) described below.

Upon determining that the transition control start requirement is not satisfied (NO in step S1), the automatic steering deactivating controller 43A returns the process to step S1. Upon determining in step S1 that that the transition control start requirement is satisfied (YES in step S1), the automatic steering deactivating controller 43A starts the transition control. Specifically, in step S2, the target automatic steering torque Tad* obtained when the transition control start requirement is determined to be satisfied is saved to a memory in the form of a transition control start target automatic steering torque Tado* by the automatic steering deactivating controller 43A. In addition, in step S2, the angle difference $\Delta\theta$ obtained when the transition control start requirement is determined to be satisfied is saved to the memory in the form of a transition control start angle difference $\Delta\theta$o by the automatic steering deactivating controller 43A.

In step S3, the automatic steering deactivating controller 43A sets the target motor torque Tm* in accordance with Equation (2):

$$Tm^* = \{1 - (\,|\Delta\theta|\,/w)^n\} \times Tado^* + (\,|\Delta\theta|\,/w)^n \times Tmd^* \quad ... (2)$$

In Equation (2), w (where w > 0) denotes a preset transition angle width. n (where n > 0) denotes a preset torque change rate adjustment parameter. In one example, n may be set at 1. Tado* denotes a transition control start target automatic steering torque saved to the memory in step S2. Tmd* denotes a target assist torque set by the target assist torque setter 41. Using Equation (2), the target motor torque Tm* is set by assigning a weight to each of the transition control start target automatic steering torque Tado* and the target assist torque Tmd* in accordance with the n-th power of the ratio of the angle difference $\Delta\theta$ to the transition angle width w (i.e., $|\Delta\theta|$ /w). As the absolute value $|\Delta\theta|$ increases, the weight $\{1 - (|\Delta\theta|$ /w)$^n\}$ assigned to the target automatic steering torque Tado* decreases, and the weight $(|\Delta\theta|/w)^n$ assigned to the target assist torque Tmd* increases. The electric motor 18 is controlled such that the motor torque produced by the electric motor 18 is equal to the target motor torque Tm* set in step S3.

In step S4, the automatic steering deactivating controller 43A determines whether a transition control suspension requirement is satisfied. The transition control suspension requirement is that the absolute value $|\Delta\theta|$ of the angle difference $\Delta\theta$ is smaller than a value $\beta \cdot |\Delta\theta o|$. The value $\beta \cdot |\Delta\theta o|$ is obtained by multiplying the absolute value $|\Delta\theta o|$ of the transition control start angle difference $\Delta\theta o$ by a predetermined value $\beta$ (where $0 < \beta < 1$). Upon determining that the transition control suspension requirement is not satisfied (NO in step S4), the automatic steering deactivating controller 43A determines in step S5 whether the absolute value $|\Delta\theta|$ of the angle difference $\Delta\theta$ is greater than the transition angle width w. When the absolute value $|\Delta\theta|$ of the angle difference $\Delta\theta$ is equal to or smaller than the transition angle width w (NO in step S5), the automatic steering deactivating controller 43A returns the process to step S3. Thus, step S3 and the subsequent steps will be carried out again.

Upon determining in step S5 that the absolute value $|\Delta\theta|$ of the angle difference $\Delta\theta$ is greater than the transition angle width w (YES in step S5), the automatic steering deactivating controller 43A ends the transition control and changes the control mode to the manual steering mode in step S6. This ends the process for the current automatic steering mode. Upon determining in step S4 that the transition control suspension requirement is satisfied (YES in step S4), the automatic steering deactivating controller 43A suspends the transition control and returns the control mode to the automatic steering mode in step S7. This returns the process to step S1.

When the transition control start requirement is determined to be satisfied as a result of a steering operation performed by the driver during the automatic steering mode, the transition control starts. The transition control involves setting the target motor torque Tm* in accordance with Equation (2). After the start of the transition control, as the absolute value $|\Delta\theta|$ of the angle difference $\Delta\theta$ increases, the weight assigned to the target automatic steering torque Tado* gradually decreases, and the weight assigned to the target assist torque Tmd* gradually increases. When the absolute value $|\Delta\theta|$ of the angle difference $\Delta\theta$ exceeds the transition angle width w, the control mode is changed to the manual steering mode. This reduces or eliminates variations in motor torque when the automatic steering control is deactivated and thus reduces a sense of discomfort felt by the driver.

In this embodiment, the transition control ends when the absolute value $|\Delta\theta|$ of the angle difference $\Delta\theta$ exceeds the transition angle width w. This makes it possible to change a transition control time by a steering operation performed by the driver. Specifically, an increase in the steering force applied to the steering wheel 2 by the driver reduces the time required for the absolute value $|\Delta\theta|$ of the angle difference $\Delta\theta$ to reach the transition angle width w, resulting in a reduction in the transition control time. Consequently, the driver is allowed to quickly deactivate the automatic steering mode in the event of an emergency, for example.

Suppose that in the above-described embodiment, the absolute value $|\Delta\theta|$ of the angle difference $\Delta\theta$ falls below the value $\beta \cdot |\Delta\theta o|$ before the absolute value $|\Delta\theta|$ of the angle difference $\Delta\theta$ exceeds the transition angle width w after the start of the transition control. In this case, the transition control is suspended, and the control mode is automatically returned to the automatic steering mode. Thus, the control mode is automatically returned to the automatic steering mode when the driver performs a steering operation such that the vehicle travels along the target path, for example, after the start of the transition control.

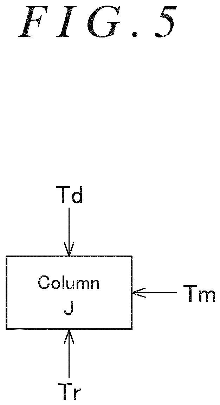

The effects of this embodiment will be described in more detail. FIG. 5 is a schematic diagram illustrating a simple model for a column type EPS. The simple model includes a column. The column receives the steering torque (driver torque) Td, the motor torque Tm, and the load torque Tr to be applied to the column from the steered wheels. Note that J denotes column inertia.

The equation of motion for the column inertia of the simple model is represented by Equation (3):

$$J \cdot d^2\theta/dt^2 = Td + Tm + Tr \quad ... (3)$$

In Equation (3), J denotes column inertia, $\theta$ denotes a column rotation angle (steering angle), and $d^2\theta/dt^2$

denotes a column acceleration. In a steady state, Td = -Tm - Tr. Assuming that the load torque Tr is zero, Td = -Tm in the steady state. For simplification of description, the following description is based on the assumption that the load torque Tr is zero.

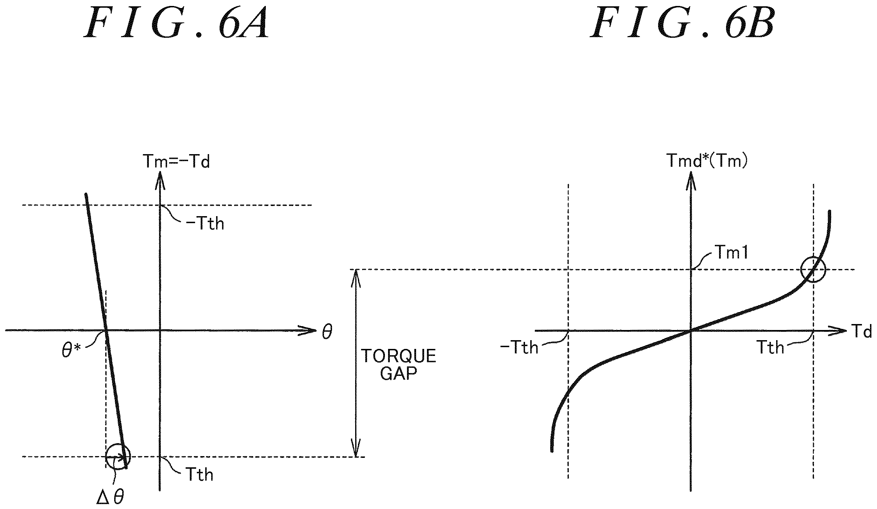

In the automatic steering mode (i.e., during the automatic steering control), the electric motor 18 is controlled by angle feedback control. In the manual steering mode (i.e., during the manual steering control), the electric motor 18 is controlled by torque feedback control. FIG. 6A is a graph illustrating the relationship between the steering angle $\theta$ and the motor torque Tm (= -Td) during the automatic steering mode. Suppose that the steering torque Td is applied to the steering wheel 2 by the driver during the automatic steering mode. In this case, the electric motor 18 produces a motor torque that cancels the steering torque Td in order to cause the steering angle $\theta$ to correspond to the target steering angle $\theta^*$. Specifically, when the steering torque Td (> 0) to steer the vehicle to the left is applied to the steering wheel 2, the electric motor 18 produces the motor torque Tm (< 0) to steer the vehicle to the right. When the steering torque Td (< 0) to steer the vehicle to the right is applied to the steering wheel 2, the electric motor 18 produces the motor torque Tm (> 0) to steer the vehicle to the left.

FIG. 6B is a graph illustrating the relationship between the steering torque Td and the target assist torque Tmd* (motor torque Tm) during the manual steering mode. Suppose that the steering torque Td is applied to the steering wheel 2 by the driver during the manual steering mode. In this case, the electric motor 18 produces a motor torque to steer the vehicle in the same direction as the steering torque Td in order to assist the driver in steering the vehicle. Specifically, when the steering torque Td (> 0) to steer the vehicle to the left is applied to the steering wheel 2, the electric motor 18 produces the motor torque Tm (> 0) to steer the vehicle to the left. When the steering torque Td (< 0) to steer the vehicle to the right is applied to the steering wheel 2, the electric motor 18 produces the motor torque Tm (< 0) to steer the vehicle to the right.

Referring to FIGS. 6A and 6B, suppose that the control mode is immediately changed to the manual steering mode, for example, when the steering torque Td exceeds the torque threshold value Tth during the automatic steering mode. In this case, after the control mode is changed to the manual steering mode, the motor torque Tm becomes a motor torque Tm1 (> 0) responsive to the torque threshold value Tth. Accordingly, a difference (i.e., a torque gap) between the motor torques before and after the control mode is changed to the manual steering mode is represented as Tm1 + Tth. This causes the driver to feel a sense of discomfort when the automatic steering control is deactivated.

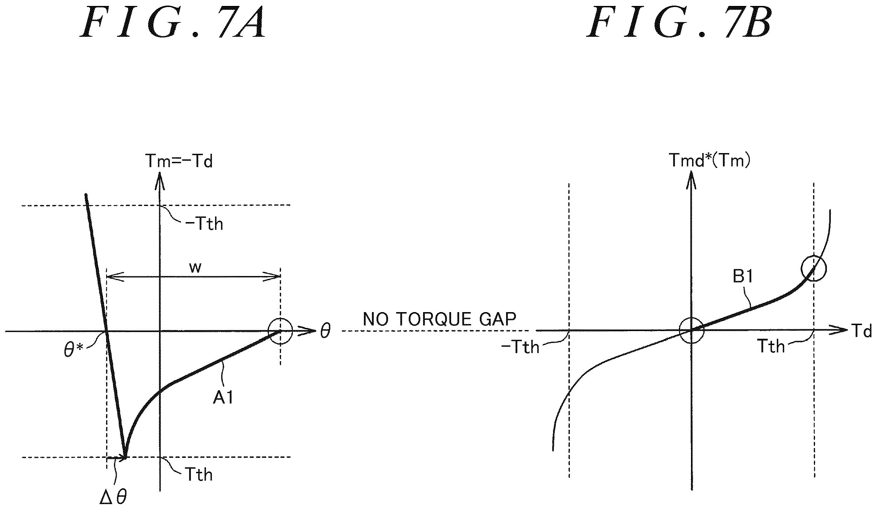

The same goes for the situation where the control mode is immediately changed to the manual steering mode when the steering torque Td is smaller than a torque threshold value -Tth during the automatic steering mode. For example, suppose that in the above-described embodiment, the steering torque Td exceeds the torque threshold value Tth during the automatic steering mode. In this case, the transition control starts when the transition control start requirement is satisfied. The start of the transition control involves setting the target motor torque Tm* in accordance with Equation (2). Accordingly, as indicated by the curve A1 in FIG. 7A, the absolute value |Tm| of the motor torque Tm decreases as the absolute value $|\Delta\theta|$ of the angle difference $\Delta\theta$ increases. The curve B1 in FIG. 7B represents changes in the target assist torque Tmd* during the transition control time. The absolute value of the target assist torque Tmd* decreases as the absolute value $|\Delta\theta|$ of the angle difference $\Delta\theta$ increases.

Because the following description is based on the assumption that the load torque Tr is zero, the steering torque Td detected by the torque sensor 12 is zero when the value of the first term in the right side of Equation (2), i.e., $\{1 - (|\Delta\theta|/w)^n\} \times$ Tado*, is zero. Thus, when the absolute value $|\Delta\theta|$ of the angle difference $\Delta\theta$ is equal to the transition angle width w, the target assist torque Tmd* is zero, so that the target motor torque Tm* (motor torque Tm) set in accordance with Equation (2) is zero. Because the control mode is changed to the manual steering mode in this state, the target assist torque Tmd* immediately after the control mode is changed to the manual steering mode is zero. Accordingly, the difference (i.e., the torque gap) between the motor torques before and after the control mode is changed to the manual steering mode is zero. This reduces a sense of discomfort felt by the driver when the automatic steering control is deactivated.

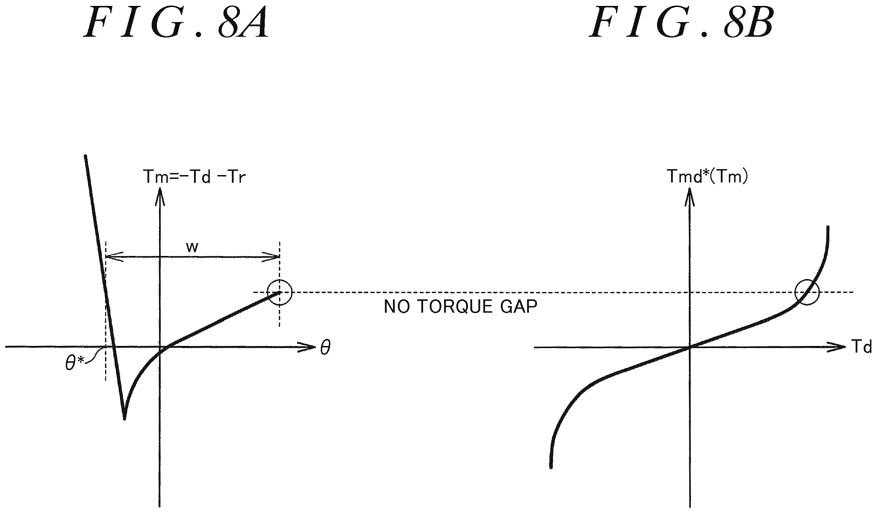

The same goes for the situation where the transition control starts when the steering torque Td falls below the torque threshold value -Tth during the automatic steering mode. The motor torques before and after the control mode is changed to the manual steering mode when the load torque Tr is not zero are obtained as illustrated in FIGS. 8A and 8B. Specifically, when the load torque Tr is not zero, the steering torque Td detected by the torque sensor 12 will not be zero even if the value of the first term in the right side of Equation (2), i.e., $\{1 - (|\Delta\theta|/w)^n\} \times$ Tado*, becomes zero. Thus, as illustrated in FIG. 8A, when the absolute value $|\Delta\theta|$ of the angle difference $\Delta\theta$ is equal to the transition angle width w, the target assist torque Tmd* responsive to the load torque Tr remains in the form of the motor torque Tm. Because the control mode is changed to the manual steering mode in this state, the target assist torque Tmd* immediately after the control mode is changed to the manual steering mode assumes a value responsive to the load torque Tr as illustrated in FIG. 8B. Accordingly, also when the load torque Tr is not zero, the difference (i.e., the torque gap) between the motor torques before and after the control mode is changed to the manual steering mode is approximately zero. This reduces a sense of discomfort felt by the driver when the automatic steering control is deactivated.

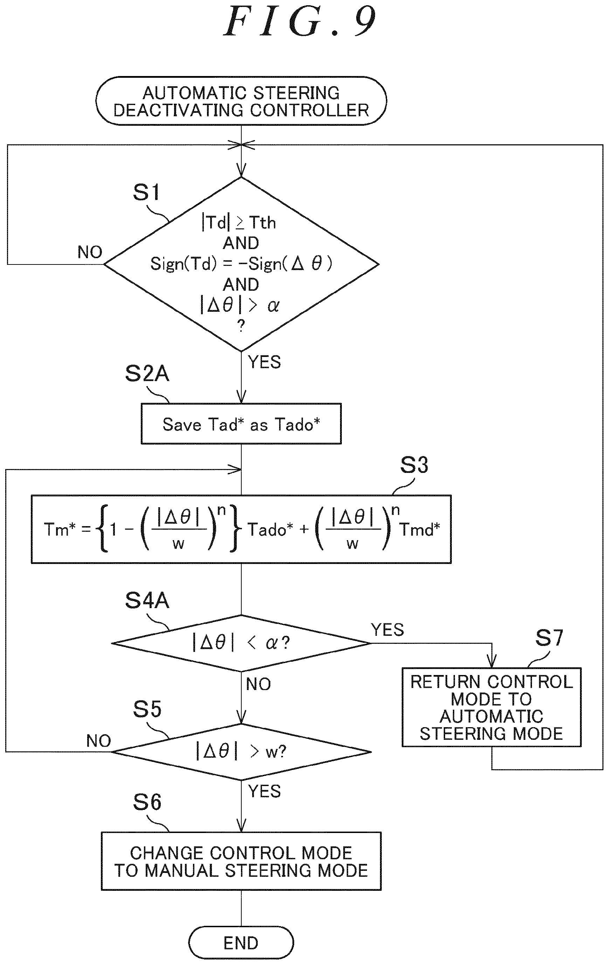

FIG. 9 is a flow chart illustrating alternative exemplary operations to be carried out by the automatic steering deactivating controller 43A during the automatic steering mode. In FIG. 9, steps corresponding to those illustrated in FIG. 4 are identified by the same numerals as those used in FIG. 4. Because steps S1, S3, S5, S6, and S7 in FIG. 9 are respectively identical to steps S1, S3, S5, S6, and S7 in FIG. 4, description thereof will be omitted. Steps S2A and S4A in FIG. 9 are respectively slightly different from steps S2 and S4 in FIG. 4.

The transition control suspension requirement in the operation example of FIG. 9 differs from the transition control suspension requirement in the operation example of FIG. 4. Other than this difference (i.e., step S4A) and step S2A, the operation example of FIG. 9 is the same as the operation example of FIG. 4. Specifically, the transition control suspension requirement used in step S4 in FIG. 4 is that the absolute value $|\Delta\theta|$ of the angle difference $\Delta\theta$ is smaller than the value $\beta \cdot |\Delta\theta o|$ obtained by multiplying the absolute value $|\Delta\theta o|$ of the transition control start angle difference $\Delta\theta o$ by the predetermined value $\beta$ (where $0 < \beta < 1$). Unlike this transition control suspension requirement, the transition control suspension requirement used in step S4A in FIG. 9 is that the absolute value $|\Delta\theta|$ of the angle difference $\Delta\theta$ is smaller than the angle threshold value $\alpha$ (where $\alpha > 0$) used in step S1. Thus, step S4A in FIG. 9 does not involve use of the transition control start angle difference $\Delta\theta o$. Accordingly, in step S2A in FIG. 9, the target automatic steering torque Tad* obtained when the transition control start requirement is determined to be satisfied is saved to the memory in the form of the transition control start target automatic steering torque Tado*, but the transition control start angle difference $\Delta\theta o$ is not saved to the memory.

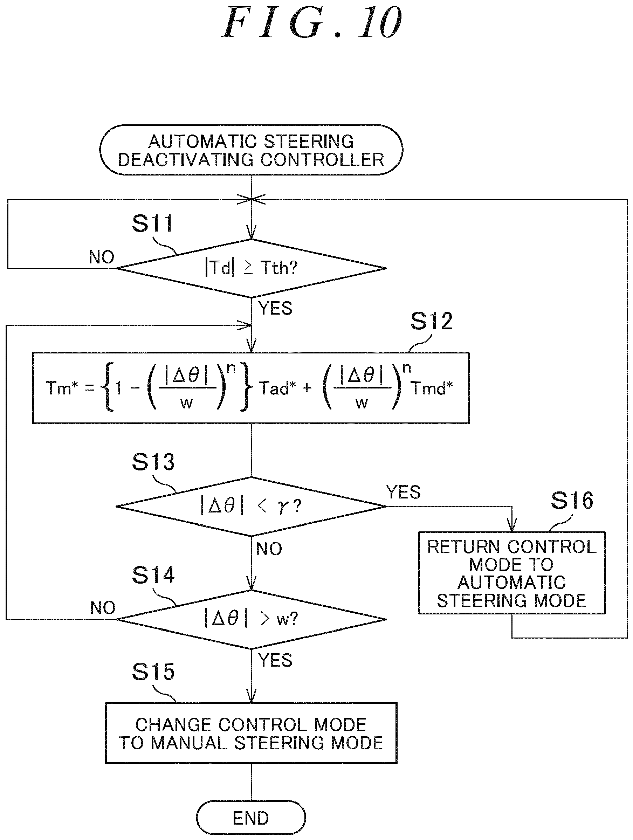

FIG. 10 is a flow chart illustrating further alternative exemplary operations to be carried out by the automatic steering deactivating controller 43A during the automatic steering mode. In step S11, the automatic steering deactivating controller 43A determines whether the transition control start requirement is satisfied. The transition control start requirement is that the absolute value $|Td|$ of the steering torque Td is equal to or greater than the predetermined torque threshold value Tth (where Tth > 0).

Upon determining that the transition control start requirement is not satisfied (NO in step S11), the automatic steering deactivating controller 43A returns the process to step S11. Upon determining in step S11 that the transition control start requirement is satisfied (YES in step S11), the automatic steering deactivating controller 43A starts the transition control. Specifically, in step S12, the automatic steering deactivating controller 43A sets the target motor torque Tm* in accordance with Equation (4):

$$ Tm^* = \{1 - (|\Delta\theta|/w)^n\} \times Tad^* + (|\Delta\theta|/w)^n \times Tmd^* \quad ... (4) $$

In Equation (4), w (where w > 0) denotes a preset transition angle width. n (where n > 0) denotes a preset torque change rate adjustment parameter. In one example, n may be set at 1. Tad* denotes a target automatic steering torque set by the target automatic steering torque setter 42. Tmd* denotes a target assist torque set by the target assist torque setter 41. Using Equation (4), the target motor torque Tm* is set by assigning a weight to each of the target automatic steering torque Tad* and the target assist torque Tmd* in accordance with the n-th power of the ratio of the angle difference $\Delta\theta$ to the transition angle width w (i.e., $|\Delta\theta|/w$). As the absolute value $|\Delta\theta|$ increases, the weight $\{1 - (|\Delta\theta|/w)^n\}$ assigned to the target automatic steering torque Tad* decreases, and the weight $(|\Delta\theta|/w)^n$ assigned to the target assist torque Tmd* increases. The electric motor 18 is controlled in accordance with the target motor torque Tm* set by the automatic steering deactivating controller 43A.

In step S13, the automatic steering deactivating controller 43A determines whether the transition control suspension requirement is satisfied. The transition control suspension requirement is that the absolute value $|\Delta\theta|$ of the angle difference $\Delta\theta$ is smaller than a value $\gamma$ (where $\gamma > 0$). The value $\gamma$ is set close to 0. Upon determining that the transition control suspension requirement is not satisfied (NO in step S13), the automatic steering deactivating controller 43A determines in step S14 whether the absolute value $|\Delta\theta|$ of the angle difference $\Delta\theta$ is greater than the transition angle width w. When the absolute value $|\Delta\theta|$ of the angle difference $\Delta\theta$ is equal to or smaller than the transition angle width w (NO in step S14), the automatic steering deactivating controller 43A returns the process to step S12. Thus, step S12 and the subsequent steps will be carried out again.

Upon determining in step S14 that the absolute value $|\Delta\theta|$ of the angle difference $\Delta\theta$ is greater than the transition angle width w (YES in step S14), the automatic steering deactivating controller 43A ends the transition control and changes the control mode to the manual steering mode in step S15. This ends the process for the current automatic steering mode. Upon determining in step S13 that the transition control suspension requirement is satisfied (YES in step S13), the automatic steering deactivating controller 43A suspends the transition control and returns the control mode to the automatic steering mode in step S16. Thus, the process is returned to step S11.

When the transition control start requirement is determined to be satisfied as a result of a steering operation performed by the driver during the automatic steering mode, the transition control starts. The transition control involves setting the target motor torque Tm* in accordance with Equation (4). After the start of the transition control, as the absolute value $|\Delta\theta|$ of the angle difference $\Delta\theta$ increases, the weight assigned to the target automatic steering torque Tad* gradually decreases, and the weight assigned to the target assist torque Tmd* gradually increases. When the absolute value Δθ of the angle difference Δθ exceeds the transition angle width w, the control mode is changed to the manual steering mode. This reduces or eliminates variations in motor torque when the automatic steering control is deactivated and thus reduces a sense of discomfort felt by the driver.

In this embodiment, the transition control ends when the absolute value |Δθ| of the angle difference Δθ exceeds the transition angle width w. This makes it possible to change the transition control time by a steering operation performed by the driver. Suppose that in the above-described embodiment, the absolute value |Δθ| of the angle difference Δθ falls below the value γ after the start of the transition control and before the absolute value |Δθ| of the angle difference Δθ exceeds the transition angle width w. In this case, the transition control is suspended, and the control mode is automatically returned to the automatic steering mode. Thus, the control mode is automatically returned to the automatic steering mode when the driver performs a steering operation such that the vehicle travels along the target path, for example, after the start of the transition control.

Although the embodiment of the invention has been described thus far, the invention may be practiced in still other forms. In the foregoing embodiment, for example, the steering angle sensor 11 is provided so as to detect the steering angle θ. Alternatively, a rotation angle sensor to detect the rotation angle of a rotor of the electric motor 18 may be provided, and the steering angle θ may be detected on the basis of the rotation angle of the rotor of the electric motor 18 detected by the rotation angle sensor. Such an alternative embodiment makes it unnecessary to provide the steering angle sensor 11.

In the foregoing embodiment, the automatic steering control carried out by the ECU 28 is lane keeping control to cause the vehicle to travel along the target path. Alternatively, automatic steering control other than lane keeping control may be carried out as long as it involves performing automatic steering by angle control using a target steering angle. Various other design changes and modifications may be made to the invention within the scope of the claims.

## Claims

1. A vehicle steering system (1) comprising:

   an electric motor (18) to provide a steering force to a steering operation mechanism (4) of a vehicle;
   an automatic steering controller (28) configured to set, in accordance with an angle difference (Δθ) between a target steering angle (θ*) and an actual steering angle (θ), a target automatic steering torque (Tad*) to reduce the angle difference (Δθ) to zero, and configured to control the electric motor (18) in accordance with the target automatic steering torque (Tad*) so as to carry out automatic steering control;
   a manual steering controller configured to control the electric motor (18) in accordance with a target assist torque (Tmd*) responsive to a steering torque (Td) so as to carry out manual steering control; and
   an automatic steering deactivator (43A) configured to change the automatic steering control to the manual steering control in response to a steering operation performed by a driver during the automatic steering control carried out by the automatic steering controller,

   **characterized in that**
   the automatic steering deactivator (43A) includes

   a transition controller configured to calculate a target motor torque (Tm*) by assigning a weight to each of the target automatic steering torque (Tad*) and the target assist torque (Tmd*) using the angle difference (Δθ) upon satisfaction of a transition control start requirement including at least a requirement that an absolute value (|Td|) of the steering torque (Td) is equal to or greater than a first predetermined value (Tth), and configured to control the electric motor (18) in accordance with the target motor torque (Tm*) so as to carry out transition control, and
   a changer configured to end the transition control and change the automatic steering control to the manual steering control when an absolute value (|Δθ|) of the angle difference (Δθ) is greater than a second predetermined value (w).

2. The vehicle steering system (1) according to claim 1, wherein
   the transition controller is configured to calculate the target motor torque (Tm*) by assigning a weight to each of the target automatic steering torque (Tad*) and the target assist torque (Tmd*) in accordance with a ratio of the angle difference (Δθ) to the second predetermined value (w).

3. The vehicle steering system (1) according to claim 2, wherein
   assuming that the angle difference is denoted by Δθ, the target automatic steering torque is denoted by Tad*, the target assist torque is denoted by Tmd*, the second predetermined value is denoted by w (where w > 0), a third predetermined value is denoted by n (where n > 0), and the target motor torque is denoted by Tm*, the target motor torque Tm* is calculated in accordance with Equation (a):

$$Tm^* = \{1 - (|\Delta\theta|/w)^n\} \times Tad^* + (|\Delta\theta|/w)^n \times Tmd^* \quad ... (a)$$

**4.** The vehicle steering system (1) according to claim 3, wherein
the automatic steering deactivator (43A) further includes a returning unit to suspend the transition control and return the transition control to the automatic steering control when the absolute value $|\Delta\theta|$ of the angle difference $\Delta\theta$ is smaller than a fourth predetermined value ($\alpha$; $\gamma$) (where the fourth predetermined value > 0) during the transition control.

**5.** The vehicle steering system (1) according to claim 1 or 2, wherein
the target automatic steering torque (Tad*) to be used to calculate the target motor torque (Tm*) during the transition control is the target automatic steering torque (Tado*) obtained when the transition control start requirement is satisfied.

**6.** The vehicle steering system (1) according to claim 5, wherein
assuming that the angle difference is denoted by $\Delta\theta$, the target automatic steering torque (Tado*) obtained when the absolute value ($|Td|$) of the steering torque (Td) exceeds the first predetermined value (Tth) is denoted by Tado*, the target assist torque is denoted by Tmd*, the second predetermined value is denoted by w (where w > 0), a third predetermined value is denoted by n (where n > 0), and the target motor torque (Tm*) is denoted by Tm*, the target motor torque Tm* is calculated in accordance with Equation (b):

$$Tm^* = \{1 - (|\Delta\theta|/w)^n\} \times Tado^* + (|\Delta\theta|/w)^n \times Tmd^* \quad ... (b)$$

**7.** The vehicle steering system (1) according to claim 6, wherein
assuming that the angle difference $\Delta\theta$ obtained when the transition control start requirement is satisfied is denoted by $\Delta\theta o$, and a predetermined value greater than 0 and smaller than 1 is denoted by $\beta$, the automatic steering deactivator(43A) further includes a returning unit to suspend the transition control and return the transition control to the automatic steering control when the absolute value $|\Delta\theta|$ of the angle difference $\Delta\theta$ is smaller than a value $\beta\cdot|\Delta\theta o|$ during the transition control.

**Patentansprüche**

**1.** Fahrzeuglenksystem (1) mit
einem Elektromotor (18) zum Bereitstellen einer Lenkkraft für einen Lenkbetätigungsmechanismus (4) eines Fahrzeugs;
einer automatischen Lenksteuerung (28), die konfiguriert ist, um in Übereinstimmung mit einer Winkeldifferenz ($\Delta\theta$) zwischen einem Soll-Lenkwinkel ($\theta^*$) und einem tatsächlichen Lenkwinkel ($\theta$) ein Soll-Automatisch-Lenkdrehmoment (Tad*) einzustellen, um die Winkeldifferenz ($\Delta\theta$) auf Null zu reduzieren, und konfiguriert ist, um den Elektromotor (18) in Übereinstimmung mit dem Soll-Automatisch-Lenkdrehmoment (Tad*) zu steuern, um eine automatische Lenksteuerung durchzuführen;
einer manuellen Lenksteuerung, die konfiguriert ist, um den Elektromotor (18) in Übereinstimmung mit einem Sollunterstützungsdrehmoment (Tmd*) zu steuern, das auf ein Lenkdrehmoment (Td) reagiert, um eine manuelle Lenksteuerung durchzuführen; und
einem automatischen Lenkungsdeaktivator (43A), der konfiguriert ist, um die automatische Lenkungssteuerung in Reaktion auf eine Lenkbetätigung, die von einem Fahrer während der automatischen Lenkungssteuerung ausgeführt ist, die von der automatischen Lenkungssteuerung durchgeführt ist, in die manuelle Lenkungssteuerung zu ändern, **dadurch gekennzeichnet, dass**
der automatische Lenkungsdeaktivator (43A) enthält:

eine Übergangssteuerung, die konfiguriert ist, um ein Soll-Motordrehmoment (Tm*) zu berechnen, indem jedem des Soll-Automatiklenkdrehmoments (Tad*) und des Sollunterstützungsdrehmoments (Tmd*) ein Gewicht zugeordnet wird, wobei die Winkeldifferenz ($\Delta\theta$) bei Erfüllung einer Übergangssteuerungs-Startanforderung verwendet wird, die mindestens eine Anforderung enthält, dass ein Absolutwert ($|Td|$) des Lenkmoments (Td) gleich oder größer als ein erster vorbestimmter Wert (Tth) ist, und konfiguriert ist, um den Elektromotor (18) in Übereinstimmung mit dem Soll-Motordrehmoment (Tm*) zu steuern, um eine Übergangssteuerung durchzuführen, und

einen Wechsler, der konfiguriert ist, um die Übergangssteuerung zu beenden und die automatische Lenksteuerung auf die manuelle Lenksteuerung zu ändern, wenn ein Absolutwert ($|\Delta\theta|$) der Winkeldifferenz ($\Delta\theta$) größer als ein zweiter vorbestimmter Wert (w) ist.

2. Fahrzeuglenksystem (1) nach Anspruch 1, wobei
die Übergangssteuerung konfiguriert ist, um das Soll-Motordrehmoment (Tm*) zu berechnen, indem jedem des Soll-Automatisch-Lenkdrehmoments (Tad*) und des Sollunterstützungsdrehmoments (Tmd*) ein Gewicht in Übereinstimmung mit einem Verhältnis der Winkeldifferenz ($\Delta\theta$) zum zweiten vorbestimmten Wert (w) zugeordnet wird.

3. Fahrzeuglenksystem (1) nach Anspruch 2, wobei
unter der Annahme, dass die Winkeldifferenz durch $\Delta\theta$ bezeichnet wird, das Soll-Automatisch-Lenkdrehmoment durch Tad* bezeichnet wird, das Sollunterstützungsdrehmoment durch Tmd* bezeichnet wird, der zweite vorbestimmte Wert durch w (wobei w > 0 ist) bezeichnet wird, ein dritter vorbestimmter Wert durch n (wobei n > 0 ist) bezeichnet wird, und das Sollmotordrehmoment durch Tm* bezeichnet wird, das Sollmotordrehmoment Tm* in Übereinstimmung mit einer Gleichung (a) berechnet wird:

$$Tm^* = \{1 - (|\Delta\theta|/w)^n\} \times Tad^* + (|\Delta\theta|/w)^n \times Tmd^* \quad \dots (a).$$

4. Fahrzeuglenksystem (1) nach Anspruch 3, wobei
der automatische Lenkungsdeaktivator (43A) ferner eine Rückführeinheit enthält, um die Übergangssteuerung zu unterbrechen und die Übergangssteuerung an die automatische Lenkungssteuerung zurückzuführen, wenn während der Übergangssteuerung der Absolutwert $|\Delta\theta|$ der Winkeldifferenz $\Delta\theta$ kleiner als ein vierter vorbestimmter Wert ($\alpha;\gamma$) (wobei der vierte vorbestimmte Wert > 0) ist.

5. Fahrzeuglenksystem (1) nach Anspruch 1 oder 2, wobei
das Soll-Automatisch-Lenkdrehmoment (Tad*), das zum Berechnen des Soll-Motordrehmoments (Tm*) während der Übergangssteuerung verwendet werden soll, das Soll-Automatisch-Lenkdrehmoment (Tado*) ist, das erhalten wird, wenn die Übergangssteuerungs-Startanforderung erfüllt ist.

6. Fahrzeuglenksystem (1) nach Anspruch 5, wobei
unter der Annahme, dass die Winkeldifferenz durch $\Delta\theta$ bezeichnet wird, das Soll-Automatisch-Lenkdrehmoment (Tado*), das erhalten wird, wenn der Absolutwert ($|Td|$) des Lenkmoments (Td) den ersten vorbestimmten Wert (Tth) überschreitet, durch Tado* bezeichnet wird, das Sollunterstützungsdrehmoment durch Tmd* bezeichnet wird, der zweite vorbestimmte Wert durch w bezeichnet wird (wobei w > 0 ist), ein dritter vorbestimmter Wert durch n bezeichnet wird (wobei n > 0 ist) und das Sollmotordrehmoment (Tm*) durch Tm* bezeichnet wird, das Soll-Motordrehmoment Tm* in Übereinstimmung mit einer Gleichung (b) berechnet wird:

$$Tm^* = \{1 - (|\Delta\theta|/w)^n\} \times Tado^* + (|\Delta\theta|/w)^n \times Tmd^* \quad \dots (b).$$

7. Fahrzeuglenksystem (1) nach Anspruch 6, wobei
unter der Annahme, dass die Winkeldifferenz $\Delta\theta$, die erhalten wird, wenn die Übergangssteuerungs-Startanforderung erfüllt ist, durch $\Delta\theta o$ bezeichnet wird, und ein vorbestimmter Wert, der größer als 0 und kleiner als 1 ist, durch $\beta$ bezeichnet wird, das automatische Lenkungsdeaktivator (43A) ferner eine Rückführeinheit enthält, um die Übergangssteuerung zu unterbrechen und die Übergangssteuerung an die automatische Lenkungssteuerung zurückzuführen, wenn während der Übergangssteuerung der Absolutwert $|\Delta\theta|$ der Winkeldifferenz $\Delta\theta$ kleiner als ein Wert $\beta \cdot |\Delta\theta o|$ ist.

**Revendications**

1. Système de direction de véhicule (1) comprenant :

   un moteur électrique (18) pour fournir une force de braquage à un mécanisme d'opération de braquage (4) d'un véhicule ;
   un contrôleur de braquage automatique (28) configuré pour établir, conformément à une différence d'angle ($\Delta\theta$) entre un angle de braquage cible ($\theta^*$) et un angle de braquage réel ($\theta$), un couple de braquage automatique cible (Tad*) pour réduire la différence d'angle ($\Delta\theta$) à zéro, et configuré pour commander le moteur électrique (18) conformément au couple de braquage automatique cible (Tad*) de manière à effectuer une commande de braquage automatique ;
   un contrôleur de braquage manuel configuré pour commander le moteur électrique (18) conformément à un couple d'assistance cible (Tmd*) en réponse à un couple de braquage (Td) de manière à effectuer une commande de braquage manuel ; et
   un désactivateur de braquage automatique (43A) configuré pour changer la commande de braquage automatique en la commande de braquage manuel en réponse à une opération de braquage effectuée par un conducteur pendant la commande de braquage automatique effectuée par le contrôleur de braquage automatique, **caractérisé en ce que**
   le désactivateur de braquage automatique (43A) comprend :

   un contrôleur de transition configuré pour calculer un couple de moteur cible (Tm*) en attribuant un coefficient de pondération à chacun du couple de braquage automatique cible (Tad*) et du couple d'assistance cible (Tmd*) en utilisant la différence d'angle ($\Delta\theta$) lors de la satisfaction d'une condition de début de commande de transition comprenant au moins une condition qu'une valeur absolue (|Td|) du couple de braquage (Td) soit supérieure ou égale à une première valeur (Tth) prédéterminée, et configuré pour commander le moteur électrique (18) conformément au couple de moteur cible (Tm*) de manière à effectuer une commande de transition, et
   un dispositif de changement configuré pour mettre fin à la commande de transition et changer la commande de braquage automatique en la commande de braquage manuel lorsqu'une valeur absolue (|$\Delta\theta$|) de la différence d'angle ($\Delta\theta$) est supérieure à une deuxième valeur (w) prédéterminée.

2. Système de direction de véhicule (1) selon la revendication 1, dans lequel
   le contrôleur de transition est configuré pour calculer le couple de moteur cible (Tm*) en attribuant un coefficient de pondération à chacun du couple de braquage automatique cible (Tad*) et du couple d'assistance cible (Tmd*) conformément à un rapport entre la différence d'angle ($\Delta\theta$) et la deuxième valeur (w) prédéterminée.

3. Système de direction de véhicule (1) selon la revendication 2, dans lequel
   en supposant que la différence d'angle est désignée par $\Delta\theta$, le couple de braquage automatique cible est désigné par Tad*, le couple d'assistance cible est désigné par Tmd*, la deuxième valeur prédéterminée est désignée par w (où w > 0), une troisième valeur prédéterminée est désignée par n (où n > 0), et le couple de moteur cible est désigné par Tm*, le couple de moteur cible Tm* est calculé conformément à l'équation (a) :

$$\mathrm{Tm}^* = \{1 - (\,|\Delta\theta|\,/\mathrm{w})^{\mathrm{n}}\} \times \mathrm{Tad}^* + (\,|\Delta\theta|\,/\mathrm{w})^{\mathrm{n}} \times \mathrm{Tmd}^* \qquad \dots \text{(a)}$$

4. Système de direction de véhicule (1) selon la revendication 3, dans lequel
   le désactivateur de braquage automatique (43A) comprend en outre une unité de retour pour suspendre la commande de transition et retourner de la commande de transition à la commande de braquage automatique lorsque la valeur absolue |$\Delta\theta$| de la différence d'angle $\Delta\theta$ est inférieure à une quatrième valeur ($\alpha$ ; $\gamma$) prédéterminée (où la quatrième valeur prédéterminée) pendant la commande de transition.

5. Système de direction de véhicule (1) selon la revendication 1 ou 2, dans lequel
   le couple de braquage automatique cible (Tad*) à utiliser pour calculer le couple de moteur cible (Tm*) pendant la commande de transition est le couple de braquage automatique cible (Tado*) obtenu lorsque la condition de début de commande de transition est satisfaite.

6. Système de direction de véhicule (1) selon la revendication 5, dans lequel

en supposant que la différence d'angle est désignée par $\Delta\theta$, le couple de braquage automatique cible (Tado*) obtenu lorsque la valeur absolue (|Td|) du couple de braquage (Td) dépasse la première valeur (Tth) prédéterminée est désigné par Tado*, le couple d'assistance cible est désigné par Tmd*, la deuxième valeur prédéterminée est désignée par w (où w > 0), une troisième valeur prédéterminée est désignée par n (où n > 0), et le couple de moteur cible (Tm*) est désigné par Tm*, le couple de moteur cible Tm* est calculé conformément à l'équation (b) :

$$Tm^* = \{1 - (|\Delta\theta|/w)^n\} \times Tado^* + (|\Delta\theta|/w)^n \times Tmd^* \quad ... (b)$$

7.  Système de direction de véhicule (1) selon la revendication 6, dans lequel
    en supposant que la différence d'angle $\Delta\theta$ obtenue lorsque la condition de début de commande de transition est satisfaite est désignée par $\Delta\theta o$, et une valeur prédéterminée supérieure à 0 et inférieure à 1 est désignée par $\beta$, le désactivateur de braquage automatique (43A) comprend en outre une unité de retour pour suspendre la commande de transition et retourner de la commande de transition à la commande de braquage automatique lorsque la valeur absolue $|\Delta\theta|$ de la différence d'angle $\Delta\theta$ est inférieure à une valeur $\beta.|\Delta\theta o|$ pendant la commande de transition.

# FIG.1

*FIG.2*

# *FIG.3*

TARGET ASSIST
TORQUE (Tmd*)

VEHICLE
SPEED
INCREASE

⟨RIGHT⟩

O

⟨LEFT⟩
STEERING
TORQUE(Td)

VEHICLE
SPEED
INCREASE

# *FIG.4*

```
        ┌─────────────────────────┐
        │  AUTOMATIC STEERING     │
        │  DEACTIVATING CONTROLLER│
        └─────────────────────────┘
```

**S1**

$$|Td| \geq Tth$$
AND
$$Sign(Td) = -Sign(\Delta\theta)$$
AND
$$|\Delta\theta| > \alpha$$
?

NO

YES

**S2**

Save Tad* as Tado*
and $\Delta\theta$ as $\Delta\theta o$

**S3**

$$Tm^* = \left\{ 1 - \left( \frac{|\Delta\theta|}{w} \right)^n \right\} Tado^* + \left( \frac{|\Delta\theta|}{w} \right)^n Tmd^*$$

**S4**

$$|\Delta\theta| < \beta \cdot |\Delta\theta o|$$
?

YES

NO

**S7**

RETURN CONTROL
MODE TO
AUTOMATIC
STEERING MODE

**S5**

$$|\Delta\theta| > w?$$

NO

YES

**S6**

CHANGE CONTROL MODE
TO MANUAL STEERING MODE

END

# *F I G . 5*

# FIG.6A

# FIG.6B

FIG. 7B

FIG. 7A

# FIG.8A

# FIG.8B

$Tm=-Td-Tr$

w

$\theta^*$

$\theta$

NO TORQUE GAP

$Tmd^*(Tm)$

$Td$

EP 3 345 806 B1

# FIG.9

```
        ( AUTOMATIC STEERING
          DEACTIVATING CONTROLLER )
```

S1

$$|Td| \geq Tth$$
$$AND$$
$$Sign(Td) = -Sign(\Delta \theta)$$
$$AND$$
$$|\Delta \theta| > \alpha$$
$$?$$

NO

YES

S2A

Save Tad* as Tado*

S3

$$Tm^* = \left\{ 1 - \left( \frac{|\Delta \theta|}{w} \right)^n \right\} Tado^* + \left( \frac{|\Delta \theta|}{w} \right)^n Tmd^*$$

S4A

$$|\Delta \theta| < \alpha ?$$

YES

NO

S7

RETURN CONTROL
MODE TO
AUTOMATIC
STEERING MODE

S5

$$|\Delta \theta| > w ?$$

NO

YES

S6

CHANGE CONTROL MODE
TO MANUAL STEERING MODE

( END )

# $FIG.10$

AUTOMATIC STEERING
DEACTIVATING CONTROLLER

**S11**

NO

$|Td| \geq Tth?$

YES

**S12**

$$Tm^* = \left\{ 1 - \left( \frac{|\Delta\theta|}{w} \right)^n \right\} Tad^* + \left( \frac{|\Delta\theta|}{w} \right)^n Tmd^*$$

**S13**

$|\Delta\theta| < \gamma ?$

YES

**S16**

RETURN CONTROL
MODE TO
AUTOMATIC
STEERING MODE

NO

**S14**

NO

$|\Delta\theta| > w?$

YES

**S15**

CHANGE CONTROL MODE
TO MANUAL STEERING MODE

END

## REFERENCES CITED IN THE DESCRIPTION

**Patent documents cited in the description**

- JP 2004256076 A

- DE 102014226781 A1